# EUROPÄISCHE PATENTSCHRIFT

(11) **EP 0 852 680 B1**
(45) Veröffentlichungstag und Bekanntmachung des Hinweises auf die Patenterteilung: **28.07.1999**
(21) Anmeldenummer: 96931045.7
(22) Anmeldetag: 07.09.1996
(51) Int. Cl.: F16L 3/123, F16L 3/13

(54) **KLAMMER ZUR HALTERUNG VON ROHREN**
CLAMP FOR SECURING PIPES
PINCE DE FIXATION DE TUBES

(30) Priorität: 29.09.1995 DE 19536316
(43) Veröffentlichungstag der Anmeldung: 15.07.1998
(73) Patentinhaber: A. Raymond & Cie, 38028 Grenoble (FR)
(72) Erfinder: MOTSCH, Uwe, D-79618 Rheinfelden (DE)
(74) Vertreter: Kirchgaesser, Johannes, Dipl.-Ing.
(86) Internationale Anmeldenummer: EP9603931
(87) Internationale Veröffentlichungsnummer: WO9713090

(56) Entgegenhaltungen:
- DE-A- 1 903 060
- US-A- 2 004 679
- US-A- 2 166 916
- US-A- 3 430 904

## Beschreibung

Die Erfindung bezieht sich auf eine Klammer zur Halterung von Rohren, insbesondere Wellrohren, bestehend aus einem mit einer Grundplatte C-förmig verbundenen, elastisch auffederbaren Klemmbügel zur Aufnahme des Rohres sowie aus an der Grundplatte angeformten Mitteln zur Verankerung der Klammer in einem Loch eines Trägerkörpers.

Eine derartige Klammer zur Verankerung in einem Loch einer Trägerplatte ist beispielsweise aus **US 2.166.916** bekannt. Die Klammer ist hierbei so ausgebildet, daß an der Grundplatte zwei schräg zusammenlaufende Seitenwände vorgesehen sind, welche an den oberen Enden eine Öffnung zum Einführen des Rohres bilden. An diesen Wänden sind zwei zur Grundplatte gerichtete, ebenfalls schräg zusammenlaufende Klemmbügel auffederbar angeformt, welche durch eine Aussparung in der Grundplatte hindurchragen und mit etwa rechtwinklig nach außen weisenden Haken versehen sind. Diese werden bei der Montage in das Loch der Trägerplatte eingeführt und dann von dem Rohr beim Eindrücken in die Öffnung seitlich auseinandergedrückt, wobei die Haken den Lochrand hintergreifen und dadurch eine feste Verankerung bewirken.

Dieses Verankerungsprinzip hat zwar den Vorteil, daß die Verankerung im Loch allein durch das Eindrücken des Rohres durchgeführt wird. Es hat aber gleichzeitig den Nachteil, daß die Klammer nur solange fest verankert bleibt, wie das Rohr von den Klemmbügeln gehalten wird. Will man das Rohr einmal enffernen, so federn die Klemmbügel wieder zusammen, wobei die Haken sich leicht aus der Verankerung herauslösen können.

Aufgabe der Erfindung ist es daher, eine Halteklammer für Rohre zu schaffen, die sich nach dem Einführen des Rohres einerseits leicht verankern läßt, die aber andererseits am Platze verankert bleibt, wenn das Rohr einmal entfernt werden muß.

Diese Aufgabe wird durch die im Anspruch 1 angegebene Erfindung gelöst. Das Niederdrücken des Klemmbügels zum Zwecke der Verankerung kann sowohl mit im Klemmbügel eingelegtem Rohr als auch mit leerem Klemmbügel erfolgen.

Weitere Einzelheiten der Erfindung sind in den Unteransprüchen angegeben, wobei die Verankerungsposition in einfacher Weise durch die im Anspruch 2 angegebenen Verschlußmittel gesichert werden kann. Durch die Merkmale nach Anspruch 3 wird die Klammer zusätzlich noch am Lochrand abgestützt und durch die Merkmale des Anspruchs 4 wird nicht nur eine Versteifung der Rückwand des Klemmbügels sondern auch eine zusätzliche Seitenführung des Klemmbügels beim Niederdrücken auf die Auflageplatte erreicht. Die Form der Profilstäbe gestattet eine Verankerung sowohl im Loch einer Trägerplatte als auch im Sackloch eines massiven Trägerkörpers wie beispielsweise eines Motorblocks.

In der Zeichnung ist ein Ausführungsbeispiel der Erfindung dargestellt und soll nachfolgend näher erörtert werden. Es zeigt:
- Fig. 1: die Rohrklammer in Vorderansicht,
- Fig. 2: die Rohrklammer in Seitenansicht,
- Fig. 3: die Rohrklammer in perspektivischer Darstellung,
- Fig. 4: die Klammer mit eingelegtem Rohr vor der Verankerung in einem Sackloch,
- Fig. 5: die Klammer mit eingelegtem Rohr nach der Verankerung im Sackloch,
- Fig. 6: einen Schnitt durch die flach anliegenden Profilstäbe gemäß Linie VI - VI in Figur 4 und
- Fig. 7: einen Schnitt durch die gespreizten Profilstäbe gemäß Linie VII - VII in Figur 5.

Die in den Figuren dargestellte Halteklammer ist aus einem einzigen Blechstreifen aus Federstahl hergestellt und dient zur Halterung von Rohren und insbesondere von Wellrohren auf Trägerkörpern aus massivem und relativ festem Material wie Hartguß, Kunststoff, Hartholz und dergleichen.

Die Klammer besteht hierbei aus einer Grundplatte **1** sowie einem mit dieser C-förmig verbundenen Klemmbügel **2** zur Aufnahme eines Wellrohres **7**. Um dieses Rohr **7** im Klemmbügel **2** in axialer Richtung festzuhalten, sind aus der Grundplatte **1** zwei gegeneinandergerichtete Lappen **3** ausgeschnitten und zum Klemmbügel **2** hin hochgebogen. Diese Lappen **3** dringen nach dem Eindrücken des Wellrohres **7** in dessen Rillen ein und dienen so als Verschiebesicherung.

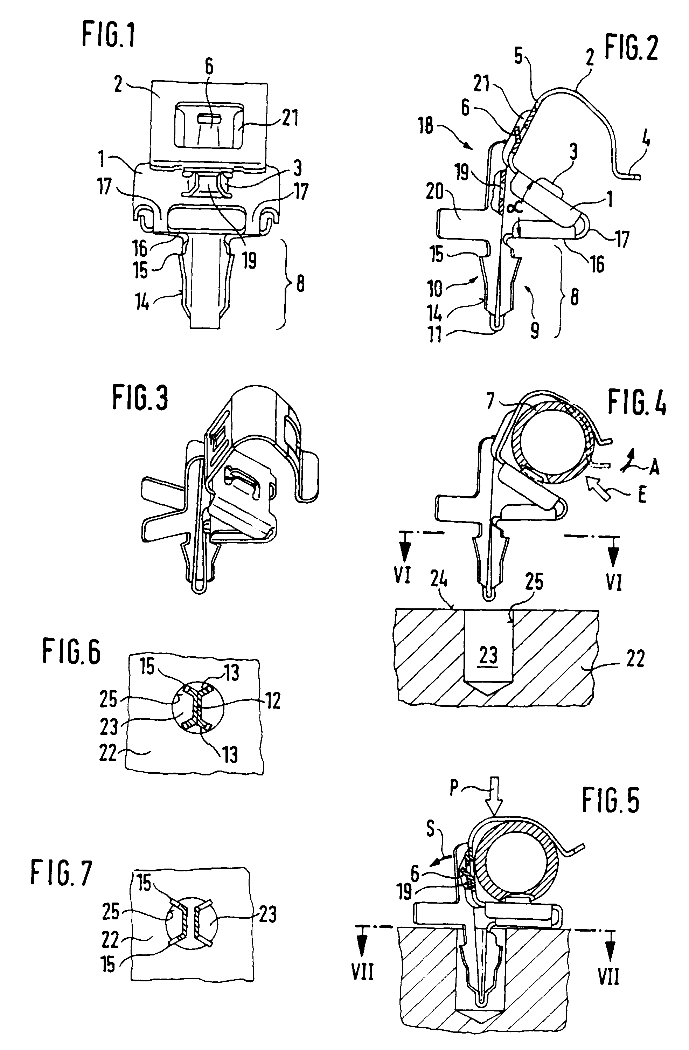

Der Klemmbügel **2** ist dem Durchmesser des zu haltenden Rohres **7** so angepaßt, daß das Rohr **7**, wie aus **Fig. 4** ersichtlich, beim Eindrücken in Richtung des Pfeiles "**E**" unter elastischer Aufweitung des Klemmbügels **2** in Richtung des Pfeiles "**A**" eingeklemmt wird. Um das Rohr **7** problemlos eindrücken zu können, besitzt der Klemmbügel **2** an seinem freien Ende einen hochgebogenen Einführlappen **4**.

Der Rohrhalter ist in noch zu beschreibender Weise mit Verankerungsmittel **8** verbunden, welche zur Verankerung des Rohrhalters in einem Sackloch **23** eines Trägerkörpers **22** dienen. Die Verankerungsmittel **8** sind hierbei aus zwei flach aneinanderliegenden Profilstäben **9** und **10** gebildet, die an ihrem unteren Ende durch einen Steg **11** miteinander verbunden sind. Diese Profilstäbe **9** und **10** bestehen, wie aus den Figuren **6** und **7** ersichtlich, jeweils aus einer flachen Mittelwand **12** und an dessen beiden Längsseiten schräg angeformten Seitenwänden **13** und weisen an den voneinander weggerichteten Seitenkanten **14** Krallen **15** auf, deren Spitzen innerhalb der Lochwandung **25** des Sackloches **23** liegen, solange die Profilstäbe **9** und **10** sich an den Mittelwänden **12** berühren.

An einem der beiden Profilstäbe, nämlich am Stab **9**, ist rechtwinklig eine Auflageplatte **16** angeformt, welche zur Auflage auf dem Rand **24** des Sackloches **23** dient. Die Auflageplatte **16** ist ihrerseits an ihrer freien Kante über deformierbare Stege **17** mit der freien Kante der Grundplatte 1 verbunden und ragt von dieser unter einem spitzen Winkel "α", welcher vorzugsweise zwischen 30 ° und 45 ° liegt, schräg nach oben.

Der andere Profilstab **10** ist in geradliniger Verlängerung biegesteif mit einem Hebel **18** verbunden, welcher an der Rückwand **5** des schräggestellten Klemmbügels **2** bündig anliegt.

Durch die erfindungsgemäße Ausgestaltung der Verankerungsmittel **8** und die Schräglage der mit der Auflageplatte **16** verbundenen Grundplatte **1** des Klemmbügels **2** wird erreicht, daß nach dem Einführen der Profilstäbe **9** und **10** in das Sackloch (**Figur 4**) beim Andrücken der Grundplatte **1** an die Auflageplatte **16** der Hebel **18** von der Rückwand **5** des Klemmbügels **2** weggedrückt wird und dadurch der mit dem Hebel **18** beigesteif verbundene Profilstab **10** von dem anliegenden Profilstab **9** abgehoben wird (**Figur 5**), und zwar derart, daß die seitlich abstehenden Krallen **15** fest an die Wandung **25** des Sackloches **23** angedrückt werden und sich dabei, wie aus **Figur 7** ersichtlich, in die Wandung **25** eingegraben .

Um die Rohrklammer in der Verankerungsposition (**Figur 5**) sicher festzulegen, ist aus der Rückwand **5** des Klemmbügels **2** ein Verschlußhaken **6** ausgestanzt und in Richtung auf den Hebel **18** schräg nach oben weggebogen, während an der Mittelwand **12** des Hebels **18** eine entsprechende Aussparung **19** vorgesehen ist.

Drückt man den Klemmbügel **2** mit dem eingelegten Rohr **7** in Richtung des Pfeiles "P" (**Figur 5**), so weicht der Hebel **18** durch den sich abwärtsbewegenden Verschlußhaken **6** in Richtung des Pfeiles "**S**" zur Seite aus, bis die Grundplatte **1** auf der Auflageplatte **16** aufliegt. In diesem Augenblick taucht der Verschlußhaken **6** in die gegenüberliegende Aussparung **19** ein und wird verrastet, so daß ein unbeabsichtigtes Lösen der Rohrklammer absolut unmöglich ist. Hierdurch ist weiterhin sichergestellt, daß die Rohrklammer im Sackloch **23** auch dann verankert bleibt, wenn das Wellrohr **7** aus dem Klemmbügel **2** herausgezogen wird.

Zur Versteifung der Rückwand **5** sind beiderseits des Verschlußhakens **6** Sicken **21** vorgesehen, welche in Richtung auf den Hebel **18** dicht neben dessen Seitenwänden **13** vorgewölbt sind. Dadurch ergibt sich vorteilhafterweise eine zusätzliche Seitenführung beim Niederdrücken des Klemmbügels **2** auf die Auflageplatte **16.**

## Patentansprüche

1. Klammer zur Halterung von Rohren, insbesondere Wellrohren, bestehend aus einem mit einer Grundplatte ( 1) C-förmig verbundenen, elastisch auffederbaren Klemmbügel ( 2 ) zur Aufnahme des Rohres ( 7 ) sowie aus an der Grundplatte (1) angeformten Mitteln ( 8 ) zur Verankerung der Klammer in einem Loch eines Trägerkörpers, **dadurch gekennzeichnet** , daß die Verankerungsmittel ( 8 ) aus zwei flach aneinanderliegenden Profilstäben ( 9 ) und ( 10 ) gebildet sind, welche an ihrem unteren Ende durch einen Steg ( 11 ) miteinander verbunden sind und an ihren Seitenkanten ( 14 ) Krallen ( 15 ) aufweisen, wobei der eine Profilstab ( 9 ) mit einer rechtwinklig angeformten Auflageplatte ( 16 ) versehen ist, welche an ihrem freien Ende über deformierbare Stege ( 17 ) mit dem freien Ende der Grundplatte ( 1 ) unter einem spitzen Winkel ( α ) verbunden ist, und wobei der andere Profilstab ( 10 ) in geradliniger Verlängerung als Hebel (18 ) ausgebildet ist, welcher an der Rückwand ( 5 ) des schräggestellten Klemmbügels ( 2 ) bündig anliegt.

2. Rohrklammer nach Anspruch 1, **dadurch gekennzeichnet,** daß die Rückwand ( 5 ) des Klemmbügels ( 2 ) mit einem Verschlußhaken ( 6 ) und der an der Rückwand ( 5 ) anliegende Hebel ( 18 ) mit einer dem Verschlußhaken ( 6 ) entsprechenden Aussparung ( 19 ) versehen sind, wobei die Verschlußhaken ( 6 ) nach dem Niederdrücken des Klemmbügels ( 2 ) in die Aussparung ( 19 ) einrastet.

3. Rohrklammer nach Anspruch 1 oder 2, **dadurch gekennzeichnet,** daß der biegesteife Hebel ( 18 ) an den abgeknickten Seitenwänden ( 13 ) auf der Höhe der Auflageplatte ( 16 ) mit zwei seitlich abstehenden Stützlappen ( 20 ) versehen ist.

4. Rohrklammer nach Anspruch 2, **dadurch gekennzeichnet,** daß die Rückwand ( 5 ) des Klemmbügels ( 2 ) beiderseits des Verschlußhakens ( 6 ) mit zwei Sicken ( 21 ) versehen ist, welche beiderseits des biegesteifen Hebels ( 18 ) dicht neben den Seitenwänden ( 13 ) vorgewölbt sind.

## Claims

1. A clip for securing pipes, in particular corrugated pipes, comprising a clamping loop (2) which can be resiliently sprung open and which is connected to a base plate (1) in a C-shape, for receiving the pipe (7), and means (8) formed on the base plate (1) for anchoring the clip in a hole in a carrier body, characterised in that the anchoring means (8) are formed from two profile bars (9) and (10) which bear flat against each other and which are connected together at their lower ends by a web portion (11) and which have claws (15) at their side edges (14), wherein the one profile bar (9) is provided with a support plate (16) which is formed thereon at a right angle and which at its free end is connected to the free end of the base plate (1) at an acute angle ( α ) by way of deformable web portions (17) and wherein the other profile bar (10) which in a rectilinear prolongation is in the form of a lever (18) which bears flush against the rear wall (5) of the inclinedly disposed clamping loop (2).

2. A pipe clip according to claim 1 characterised in that the rear wall (5) of the clamping loop (2) is provided with a closure hook (6) and the lever (18) which bears against the rear wall (5) is provided with an opening (19) corresponding to the closure hook (6), wherein the closure hook (6) engages into the opening (19) after the clamping loop (2) is depressed.

3. A pipe clip according to claim 1 or claim 2 characterised in that the flexurally stiff lever (18) is provided with two laterally projecting support lugs (20) at the angled side walls (13) at the level of the support plate (16).

4. A pipe clip according to claim 2 characterised in that the rear wall (5) of the clamping loop (2) is provided on both sides of the closure hook (6) with two beads (21) which protrude on both sides of the flexurally stiff lever (18) closely beside the side walls (13).

## Revendications

1. Pince de fixation de tubes, notamment des tubes ondulés, se composant d'un étrier de serrage (2) capable de se déformer de manière élastique, relié selon une configuration en forme de C à une plaque de base (1), destiné à enserrer un tube (7), ainsi que de moyens (8) réalisés solidaires par formage de la plaque de base (1) pour l'ancrage de la pince dans un trou ménagé dans un élément formant support, caractérisée en ce que les moyens d'ancrage (8) sont en l'occurrence constitués par deux barrettes profilées (9) et (10) disposées à plat l'une contre l'autre, qui sont reliées ensemble au niveau de leur extrémité inférieure par un élément formant entretoise (11) et qui présentent, au niveau de leurs arêtes latérales (14) des griffes (15), une barrette profilée (9) étant en l'occurence munie d'une plaque d'assise (16) réalisée solidaire par formage selon une disposition en angle droit qui, au niveau se son extrémité libre, est réliée, par l'intermédiaire d'éléments entretoise (17) susceptibles de se déformer, à l'extrémité libre de la plaque de base (1), sous un angle aigu << α >> et l'autre barrette profilée (10) étant réalisée dans son prolongement rectiligne sous la forme d'un levier (18) qui est disposé en affleurement de la paroi arrière (5) de l'étrier de serrage (2) à disposition oblique.

2. Pince de fixation de tubes selon la revendication 1, caractérisée en ce que la paroi arrière (5) de l'étrier de serrage (2) est munie d'un crochet d'arrêt (6) et le levier (18) en contact avec la paroi arrière (5) comporte un évidement (19) correspondant au crochet d'arrêt (6), le crochet d'arrêt (6) venant en l'occurrence s'encastrer dans l'évidement (19) une fois que l'on a poussé vers le bas l'étrier de serrage (2).

3. Pince de fixation de tubes selon la revendication 1 ou 2, caractérisée en ce que le levier rigide à la flexion (18) est muni, au niveau des parois latérales (13) repliées selon une disposition oblique, à la hauteur de la plaque d'assise (16) de deux languettes d'appui (20) faisant saillie sur le côté.

4. Pince de fixation de tubes selon la revendication 2, caractérisée en ce que la paroi arrière (5) de l'étrier de serrage (2) est munie, de part et d'autre du crochet d'arrêt (6) de deux nervures (21) qui forment un bombement de part et d'autre du levier rigide à la flexion (18) tout à côté des parois latérales (13).
